# EUROPÄISCHE PATENTSCHRIFT

(11) **EP 0 904 186 B1**
(45) Veröffentlichungstag und Bekanntmachung des Hinweises auf die Patenterteilung: **16.10.2002**
(21) Anmeldenummer: 97917296.2
(22) Anmeldetag: 08.04.1997
(51) Int. Cl.: B29C 45/42

(54) **SPRITZGIESSMASCHINE MIT EINER ENTNAHMEEINRICHTUNG**
INJECTION MOULDING MACHINE WITH AN EXTRACTOR
MACHINE A MOULER PAR INJECTION COMPORTANT UN DISPOSITIF DE DEMOULAGE

(30) Priorität: 15.04.1996 DE 19614804
(43) Veröffentlichungstag der Anmeldung: 31.03.1999
(73) Patentinhaber: Hehl, Karl, 72290 Lossburg (DE)
(72) Erfinder: Hehl, Karl, 72290 Lossburg (DE)
(74) Vertreter: Reinhardt, Harry
(86) Internationale Anmeldenummer: EP9701737
(87) Internationale Veröffentlichungsnummer: WO97038841

(56) Entgegenhaltungen:
- EP-A- 0 382 612
- EP-A- 0 624 448
- WO-A-92/19434
- US-A- 3 773 457
- PATENT ABSTRACTS OF JAPAN vol. 13, no. 55 (M-795) [3403] , 8.Februar 1989 & JP 63 262217 A (AUTO K.K.), 28.Oktober 1988,

## Beschreibung

Die Erfindung betrifft eine Spritzgießmaschine zur Verarbeitung plastifizierbarer Massen mit einer Entnahmeeinrichtung nach dem Oberbegriff des Anspruches 1.

In EP 0 624 448 A1 ist eine derartige Spritzgießmaschine beschrieben, bei der die Entnahmeeinrichtung in einer Kulisse geführt ist, welche eine aufwendige dreidimensional gewölbte Zylinderfläche ist. Hier ist das Entnahmemittel quer zur Schließachse angeordnet. Dadurch ist ein zusätzlicher Raumbedarf neben dem Formspannraum erforderlich, was eine zusätzliche Schutzeinrichtung erfordert. Im Ausführungsbeispiel der Figuren 11-14 ist daher ein erheblicher Aufwand erforderlich, um die Entnahmeeinrichtung unter einer entsprechenden, in den meisten Industriestaaten verlangten Schutzeinrichtung anzuordnen. Das Entnahmemittel selbst ist mit einem Führungszapfen in einer Kulissenführung geführt, jedoch benötigt das Betätigungselement in Verbindung mit den beiden Antriebsmotoren zusätzlichen Raum, da eine Schwenkbarkeit der Antriebsmotoren ebensowenig vorgesehen ist, wie das Betätigungselement selbst in den Kulissenführungen zu führen.

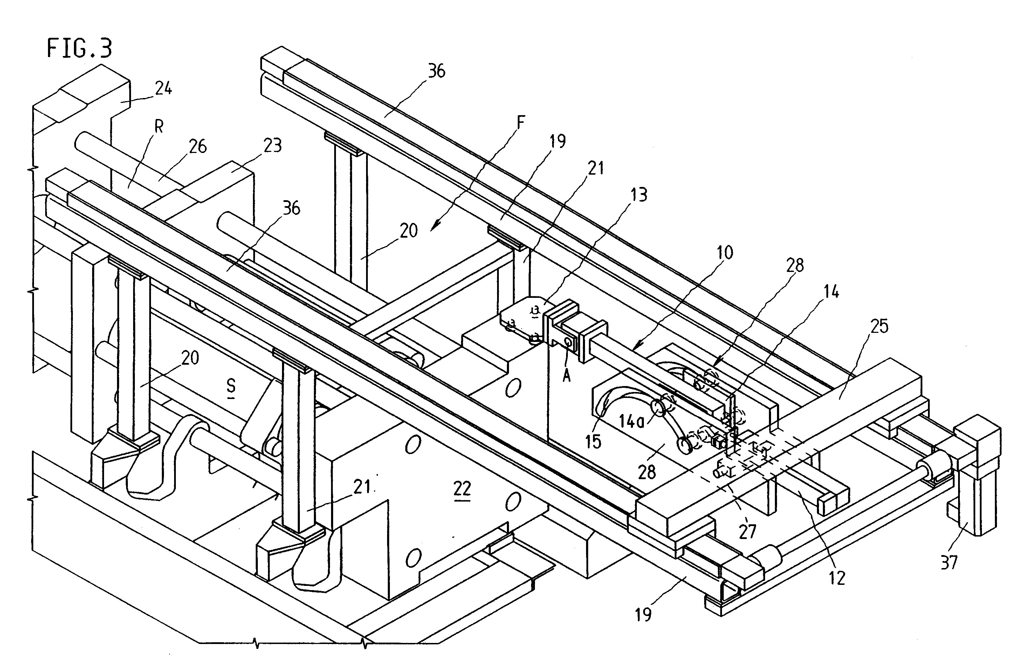

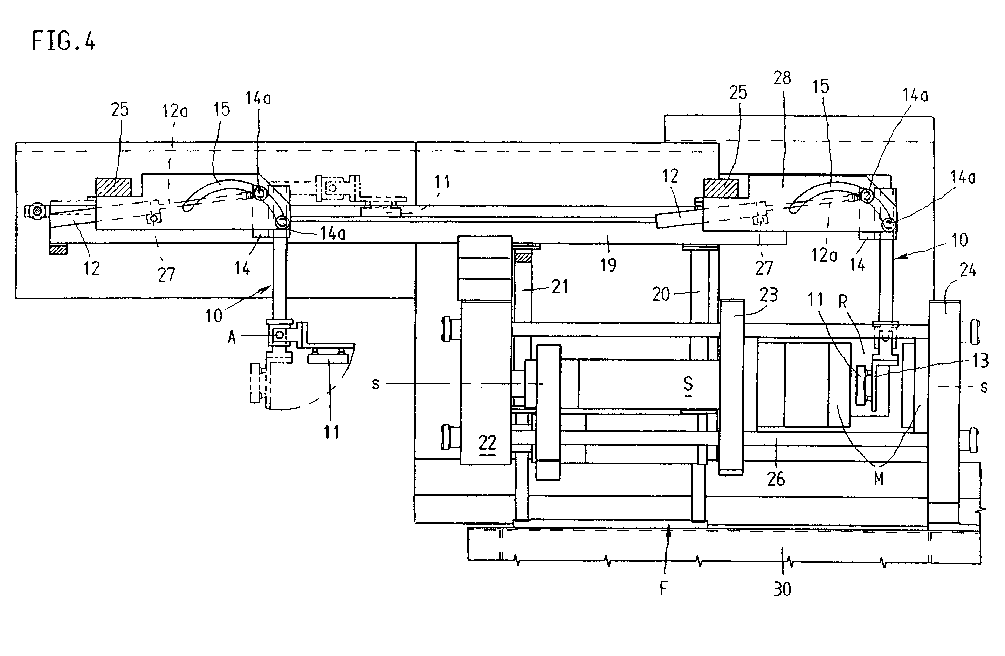

Aus US-A 3,773,457 ist eine Entnahmeeinrichtung bekannt, die durch eine im wesentlichen quer zur Schließachse verlaufende Kulisse geführt wird. Auch hier besteht in der Ebene vertikal zur Schließachse ein zusätzlicher Raumbedarf, der durch eine Schutzeinrichtung abzudecken wäre, wenn man dieses Prinzip auf eine Spritzgießmaschine übertragen würde. Dies wird auch dadurch bedingt, daß eine Trennung zwischen der Kulissenführung und dem Angriffspunkt für die Antriebseinheit erfolgt, was ein Vergleich zwischen Fig. 3 und Fig. 4 verdeutlicht.

Eine Spritzgießmaschine mit einer Entnahmeeinrichtung ist ferner aus der EP-A 359 013 bekannt. Dort wird ein Handling als Entnahmeeinrichtung eingesetzt, das dazu bestimmt ist, Spritzteile aus dem Formspannraum zu befördern. Zu diesem Zweck ist ein mehrachsiges System vorgesehen, das eine zielgenaue Entnahme der Spritzteile als auch eine exakte Ablage der Spritzteile in Aufnahmeöffnungen ermöglicht. Abgesehen von der hierfür erforderlichen Koordination der drei Achsen ist ein nicht zu unterschätzender Raumbedarf über der Spritzgießmaschine notwendig, der meist Spezialanfertigungen der Schutzeinrichtung erforderlich macht.

Aus der EP-A 218 101 ist eine zweiachsige Entnahmeeinrichtung bekannt, bei der die zweite Achse in der Symmetrieebene der Spritzgießeinheit vertikal in die Trennebene eintaucht. Auch hier ist für die vertikale Achse ein beträchtlicher Raumbedarf erforderlich.

Ausgehend von diesem Stand der Technik liegt der vorliegenden Erfindung die Aufgabe zugrunde, an einer Spritzgießmaschine der eingangs genannten Gattung eine Entnahmeeinrichtung zu schaffen, die einen geringeren Raumbedarf benötigt.

Diese Aufgabe wird durch die Merkmale des Anspruches 1 gelöst.

Die Betätigung der Entnahmeeinrichtung erfolgt nun im wesentlichen in einer Antriebsrichtung, wobei ein Einsteuern in den Formspannraum über eine Kulissenführung erfolgt, die sich im wesentlichen parallel zur Schließachse erstreckt. Die Kulissenführung arbeitet mit der Antriebseinheit so zusammen, daß kein oder nur ein geringfügiger zusätzlicher Raumbedarf erforderlich ist, und sich die grundsätzlichen baulichen Voraussetzungen für eine Anordung der Entnahmeeinrichtung innerhalb bereits von der Spritzgießmaschine beanspruchter Flächen ergeben. Damit kann die Entnahmeeinrichtung unter bereits bestehenden Schutzeinrichtungen angeordnet werden, so daß sie auch jederzeit leicht an bestehenden Maschinen nachrüstbar ist.

Während insofern in den Entgegenhaltungen nicht nur ein zusätzlicher Raum für die Entnahmeeinrichtung erforderlich war, der durch gesonderte Schutzeinrichtungen abgedeckt werden mußte, sondern auch aufwendige Umlenkmittel vorgesehen waren, um eine statische Bestimmtheit der Antriebseinheit zu erzielen, wird nun die Antriebseinheit zunächst an beiden Enden gelenkig gelagert. Um dennoch eine statische Bestimmtheit zu erreichen, um also die Entnahmeeinrichtung gezielt zum Entnahmepunkt führen zu können, wird der Führungsblock selbst in der Kulissenführung an wenigstens zwei Punkten so gelagert, daß in jedem Betriebszustand eine eindeutige Lage sichergestellt ist. Gleichzeitig werden aber die Kulissenführung und die Antriebseinheit so angeordnet, daß die Hauptbewegungsrichtung bzw. die Längserstreckung in Richtung der Schließachse liegt, so daß das Entnahmemittel im ausgeschwenkten Zustand keinen zusätzlichen Raum benötigt. Dennoch ist die Entnahmeeinrichtung aus wenigen Bauelementen einfach herzustellen.

Es zeigen:
- Fig. 1: eine Formschließeinheit einer Spritzgießmaschine mit einer daran angebrachten Entnahmeeinrichtung in einer dreidimensionalen Darstellung,
- Fig. 2: eine Darstellung gemäß Fig. 1, wobei die Entnahmeeinrichtung zusätzlich in Richtung der Schließachse beweglich ist,
- Fig. 3: ein weiteres Ausführungsbeispiel einer auf einem Stützrahmen angeordneten Entnahmeeinrichtung in einer Ansicht gemäß Fig. 1,
- Fig. 4: die Formschließeinheit gemäß Fig. 3 in Seitenansicht,
- Fig. 5a-5d: eine schematische Darstellung des Bewegungsablaufs der Entnahmeeinrichtung,
- Fig. 6: die mit einer Schutzeinrichtung versehene Formschließeinheit gemäß Fig. 3 in einer Ansicht von hinten.

In den Figuren ist eine Formschließeinheit F einer Spritzgießmaschine zur Verarbeitung plastifizierbarer Massen wie Kunststoffe, pulvrige Massen oder keramische Massen dargestellt. Die Spritzgießmaschine besitzt einen stationären Formträger 24 und einen beweglichen Formträger 23, der über einen Schließmechanismus S bewegbar ist. In einen zwischen den Formträgern aufgespannten Formspannraum R ist eine Spritzgießform M einführbar, die zur Bildung eines Formhohlraums mittels des Schließmechanismus S verschließbar und wieder zu öffnen ist. Der Schließmechanismus S stützt sich über ein Abstützelement 22 ab, das im Ausführungsbeispiel über Holme 26 mit dem stationären Formträger 24 in Verbindung steht. Alternativ sind beliebige Kraftübertragungselemente denkbar, die auch einen freien Zugang ohne Holme 26 zum Formspannraum R ermöglichen. In die Form spritzt üblicherweise eine zeichnerisch nicht dargestellte Spritzgießeinheit über die Durchtrittsöffnung 24a des stationären Formträgers 24 ein.

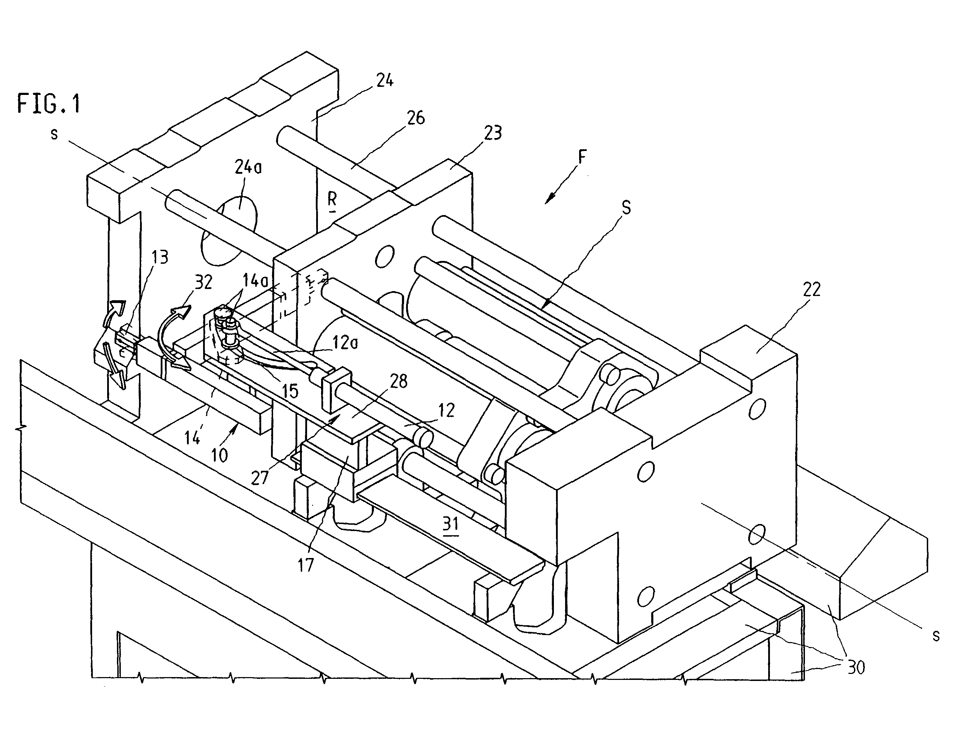

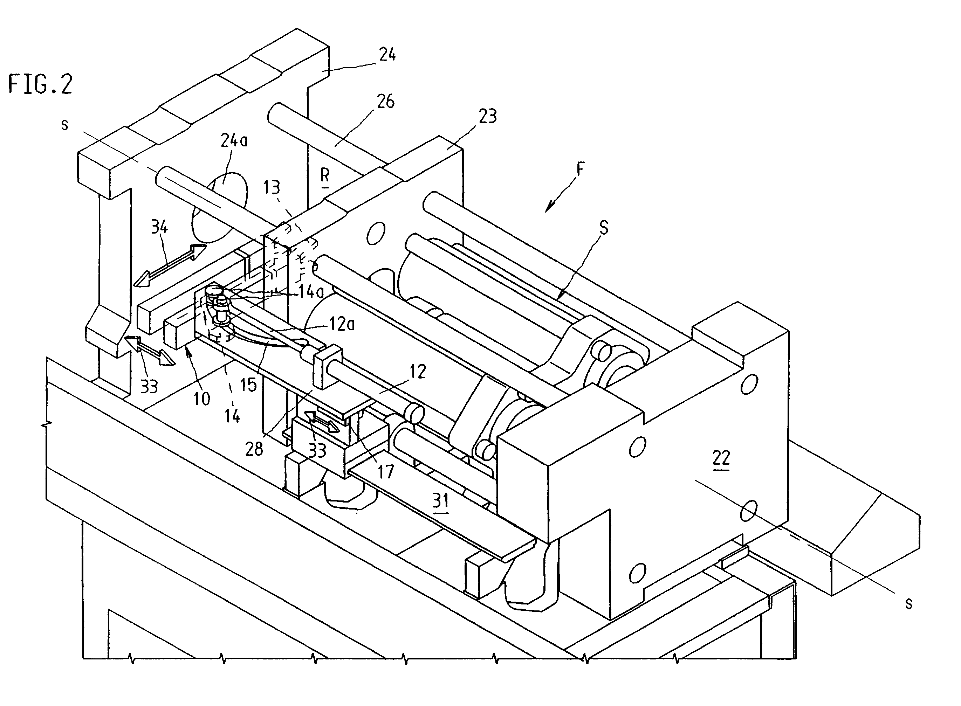

In allen Ausführungsbeispielen ist eine Entnahmeeinrichtung 10 zur Entnahme von beim Spritzgießen entstandenen Teilen wie Angüssen und/oder Spritzteilen 11 aus der geöffneten Spritzgießform M vorgesehen. Ein Entnahmemittel 13 der Entnahmeeinrichtung 13 kann die Form eines Greifers wie in den Fign. 1 und 2 aufweisen, kann jedoch auch in jeder beliebigen anderen Ausführung vorhanden sein, z.B. als pneumatisch betätigter Sauger 13, wie in Fig.3 dargestellt. Mit dieser Entnahmeeinrichtung 10 können einerseits Angüsse mit einem Picker entfernt werden, oder es können auch Spritzteile, gleichgültig ob Gut- oder Schlechtteile gehandhabt werden. Die Entnahmeeinrichtung 10 wird über eine Antriebseinheit 12 bewegt, die auf einer Führungsbahn im wesentlichen parallel zur Schließachse s-s betätigbar ist. Fig. 1 verdeutlicht insofern die parallel zur Schließachse s-s angeordnete Antriebseinheit, die an einem Ende um eine Schwenkachse 27 an einem Kulissenelement 28 schwenkbar gelagert ist. Das Kulissenelement 28 kann wie zeichnerisch dargestellt die Kulissenführung 15 aufweisen, jedoch ist auch eine andere Anordnung denkbar, bei der das Kulissenelement 28 durch die Formschließeinheit oder ein anderes Bauteil gebildet ist, wobei an einer Stelle des Bauteils die Schwenkachse und an einer anderen Stelle die Kulissenführung vorgesehen ist, ohne daß beide Stellen zu ein und demselben Bauteil gehören müssen. Die Antriebseinheit 12 ist im Ausführungsbeispiel eine Kolben-Zylinder-Einheit, deren Kolbenstange 12a als anderes Ende der Antriebseinheit mit einer Kulissenführung 15 eines Führungsblocks 14 zusammenwirkt. Die Antriebseinheit 12 ist dabei schwenkbar am Kulissenelement 28 und gelenkig am Führungsblock 14 befestigt. Mit diesem anderen Ende greift die Antriebseinheit 12 an diesem Führungsblock 14 für die Entnahme-einrichtung 10 an. Bei Betätigung der Antriebseinheit bewegt sich der Führungsblock 14 auf der von der Schließachse weggewölbten Führungsbahn in Form der Kulissenführung 15 so, daß das Entnahmemittel 13 in den Formspannraum R ein- bzw. ausgeführt wird. Bevorzugterweise ist dabei die Kulissenführung so ausgebildet, daß sie sich innerhalb einer ebenen Fläche erstreckt. Andere Ausführungsformen sind allerdings denkbar, wenn dies der jeweilige Einsatzzweck erfordert, so daß auch auf dreidimensionale Kulissenführungen übergegangen werden kann. Dies ist jedoch in den meisten Fällen nicht erforderlich, da durch die Führung des Führungsblocks 14 an zwei Punkten innerhalb der Kulissenführung 15 dieses Bedürfnis kaum auftritt.

Um statische Bestimmtheit zu erreichen, ist der Führungsblock 14 wenigstens an zwei Punkten in der Kulissenführung 15 mittels der Führungsbolzen 14a gelagert, so daß sich eine genaue Führung des Entnahmemittels 13 ergibt und für jeden Betriebszustand eine eindeutige Lage trotz der gelenkigen Lagerung der Antriebseinheit 12 ergibt.

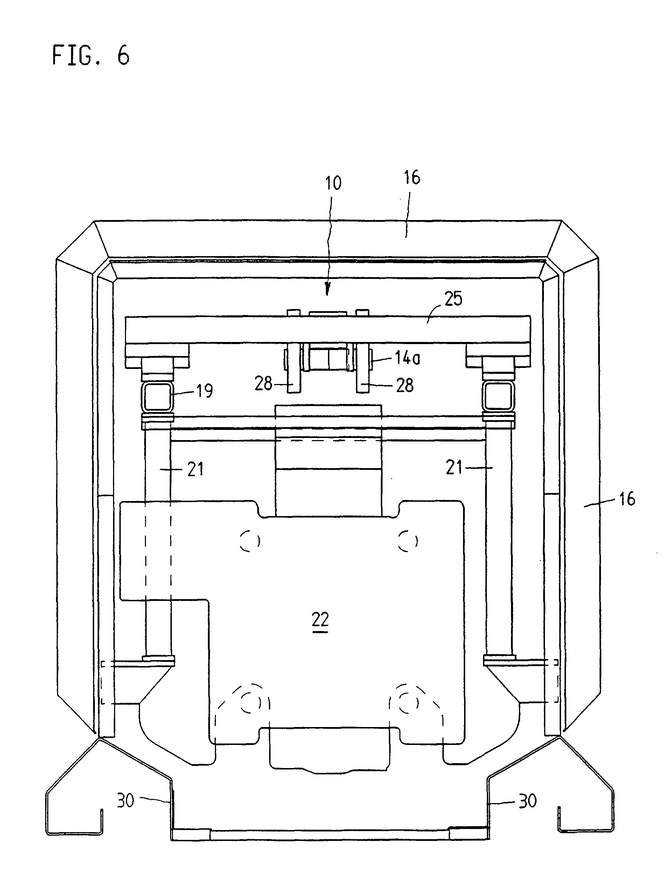

Die Entnahmeeinrichtung kann horizontal in den Formspannraum R eingreifen, wie dies in den Fign. 1 und 2 dargestellt ist, sie kann jedoch auch vertikal eingreifen, sofern sie entsprechend an der Spritzgießmaschine abgestützt wird. Denkbar ist ebenfalls, die Lagerung, die im Ausführungsbeispiel der Fign. 1 und 2 über die Lagerschiene 31 erfolgt, schwenkbar so anzuordnen, daß der Maschinenbenutzer die Vorrichtung beliebig verschwenken kann, um die Raumverhältnisse zu optimieren und zum Beispiel einen freien Zugang zum Formspannraum zu besitzen. Ohnehin greift die Entnahmeeinrichtung 10 nahezu nicht in den Formspannraum bzw. in die Randbereiche vor oder über dem Formspannraum ein. Die Entnahmeeinrichtung 10 ist mit ihrer Antriebseinheit 12 innerhalb der vertikalen bzw. horizontalen, quer zur Schließachse s-s gerichteten Projektion der Spritzgießmaschine angeordnet. Selbst in Verbindung mit dem für die Betätigung der Antriebseinheit 12 und der Entnahmeeinrichtung 10 erforderlichen Bewegungsraum kann die Entnahmeeinrichtung 10 gemäß Fig. 6 unter einer üblichen und gegenüber der Schutzreinrichtung 16 an der Maschine selbst unveränderten Schutzeinrichtung angeordnet werden. Ein zusätzlicher Raumbedarf vor, neben oder über der Maschine ist insofern nicht erforderlich.

Während in Fig. 1 die Entnahmeeinrichtung gemäß dem Pfeil 32 in den Formspannraum R verschwenkbar ist, wird in einer weiteren Ausbaustufe in Fig. 2 gemäß dem Pfeil 33 zusätzlich ein Entformungshub vorgesehen. Hierzu ist die Antriebseinheit 12 auf einem in Richtung der Schließachse beweglichen Schlitten 17 angeordnet. Dadurch ist es möglich, daß das Entnahmemittel 13 das Spritzteil und/oder den Anguß 11 greift und entformt, wie dies durch die in zwei Positionen befindliche Entnahmeeinrichtung in Fig. 2 verdeutlicht wird. Sodann wird die Kulissenführung 15 betätigt und das Entnahmemittel aus der Endstellung der Antriebseinheit 12 in Entnahmeposition in der Spritzgießform in die andere Endstellung in eine Abwurfposition und/oder Transportposition außerhalb des Formspannraums R überführt. Diese Abwurfposition ist so angeordnet, daß Angüsse z.B. über eine Zerkleinerungseinrichtung wieder aufbereitet werden können. Genügt der Raum zwischen den Formhälften der Form nicht zum platzsparenden Ausschwenken der Entnahmeeinrichtung 10, kann mit einer Bewegung gemäß Pfeil 34 vor der Schwenkbewegung das entformte Teil zusätzlich aus dem beengten Bereich im Formspannraum R vorzugsweise unter Verkürzung der Entnahmeeinrichtung ausgefahren werden. Für diesen kurzen Hub kann ein beliebiger, zeichnerisch nicht dargestellter Antriebsmechanismus vorgesehen werden.

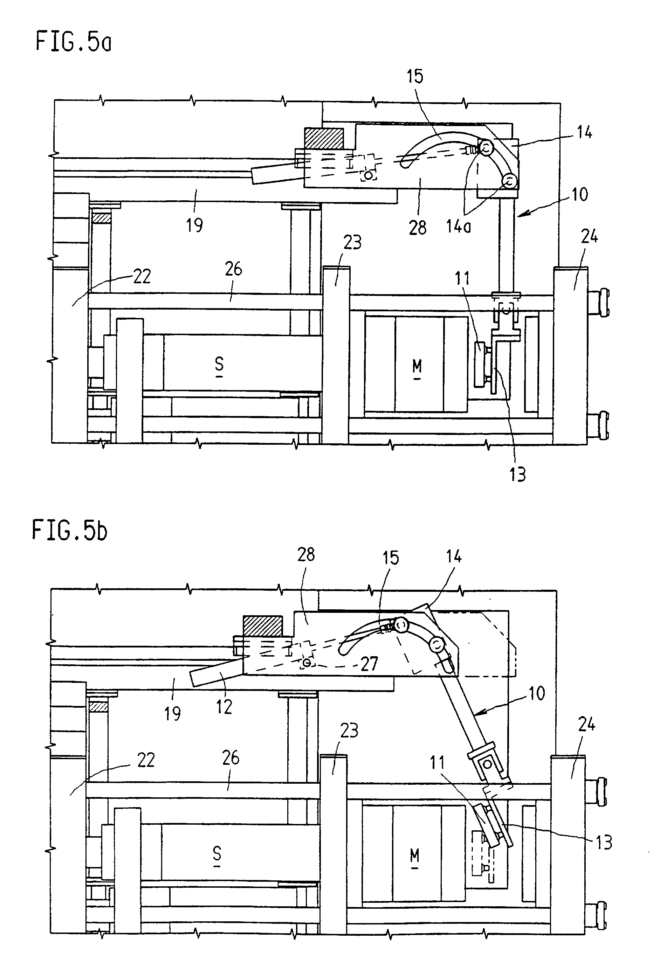

Bereits durch die bewegliche Anordnung der Antriebseinheit auf dem Schlitten 17 ist es möglich, eine Bewegungskombination zu erzeugen, die trotz des Einschwenkens der Entnahmeeinrichtung in den Formspannraum ein nahezu geradliniges Herausführen des Entnahmemittels 13 aus dem Formspannraum R ermöglicht (vergl. unten Erläuterung zu Fig. 5a-5d). Die Beweglichkeit und die damit verbundenen Möglichkeiten können jedoch noch weiter gesteigert werden, indem die Entnahmeeinrichtung 10 auf einem Stützrahmen zusätzlich beweglich geführt wird. In Fig. 3 ist ein derartiger Stützrahmen dargestellt, der dort aus vorzugsweise zwei Trägerbalken 19 besteht, auf denen Führungsschienen 36 für einen Querschlitten 25 vorgesehen sind. Gemäß Fig. 3, 4 erstrecken sich die Trägerbalken 19 über die Längserstreckung der Formschließeinheit F nach hinten hinaus. Dadurch kann der Querschlitten 25 die Entnahmeeinrichtung 10 aus einer Entnahmeposition über der Spritzgießform M bis in eine Ablageposition hinter oder über der Formschließeinheit überführen. Die zwei Trägerbalken 19 - bedarfsweise ist auch eine Konstruktion mit nur einem Trägerbalken denkbar - sind über je zwei Stützbalken über der Formschließeinheit F abgestützt. Der hintere Stützbalken 21 befindet sich in Höhe des Abstützelements 22 für den Schließmechanismus, während der vordere Stützbalken 20 gemäß Fig. 3 hinter dem beweglichen Formträger 23 in seiner hintersten Stellung angeordnet ist. Diese verhältnismäßig kurze Abstützung wird durch den leichten Aufbau der hier als Handling verwendeten Entnahmeeinrichtung ermöglicht, da im wesentlichen nur ein Antriebsmechanismus bewegt werden muß, was nebenbei zur Verringerung der Massenträgheitskräfte beiträgt. Dadurch kann die Entnahmeeinrichtung 10 als vollwertiges Handling eingesetzt werden.

Das Kulissenelement 28 ist an dem Querschlitten 25 nach vorne ragend angeordnet, schon allein um die Kulissenführung 15 anzubringen. Dies ermöglicht aber auch, daß der Trägerbalken 19 in seiner Projektion lediglich geringfügig in den Formspannraum R hineinragt. Dies erleichtert wesentlich den Zugang zum Formspannraum R. Der Querschlitten 25 selbst ist z.B. über eine zeichnerisch nicht dargestellte endlose Kette mittels des Antriebs 37 bewegbar.

Die Fign. 5a-5d verdeutlichen die Möglichkeit der Entnahmeeinrichtung und machen auch deutlich, daß sich die Entnahmeeinrichtung 10 nach oben kaum über das Kulissenelement 28 hinaus erstreckt, was die Anordnung unter einer Schutzeinrichtung 16 gemäß Fig. 6 ermöglicht. In Fig. 5a entnimmt das Entnahmemittel 13 der Entnahmeeinrichtung 10 ein Spritzteil 11 aus der geöffneten Spritzgießform M. Hierbei befindet sich der über Führungsbolzen 14a in der Kulissenführung 15 geführte Führungsblock 14 in seiner Endstellung.

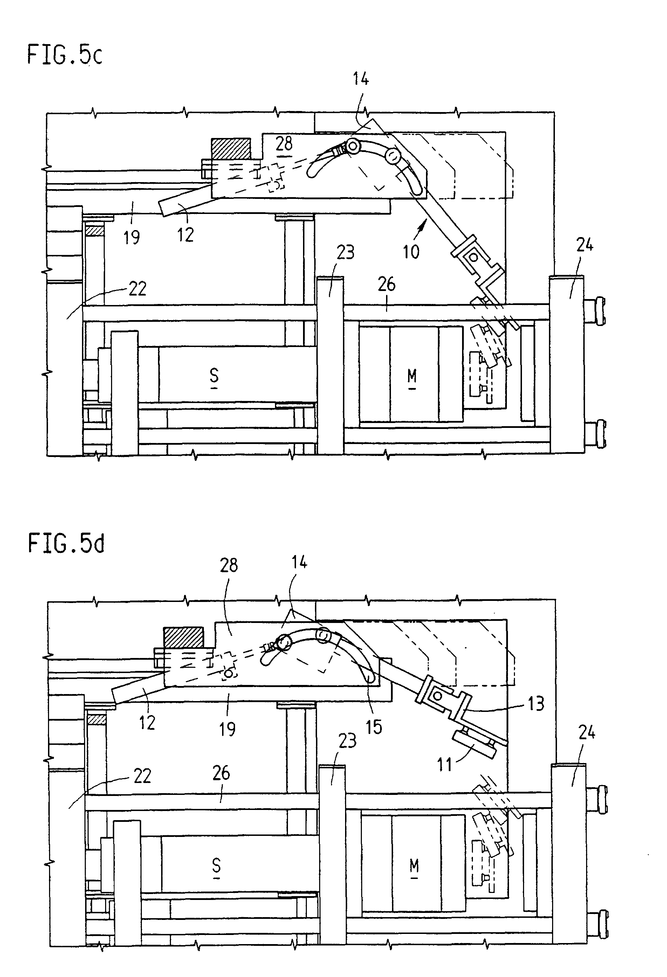

In Fig. 5b, in der wie auch in den weiteren Figuren die vorausgegangene Stellung gestrichelt dargestellt ist, ist nun einerseits das Kulissenelement 28 bereits etwas zurückgezogen, während gleichzeitig die Antriebseinheit 12 den Führungsblock 14 etwas entlang der Kulissenführung 15 verschoben hat. Bei immer noch gleichbleibendem Öffnungshub der Form wird das Spritzteil 11 somit allmählich, wie auch in Fig. 5c verdeutlicht, nahezu geradlinig aus der Spritzgießform M entnommen. Fig. 5c verdeutlicht den maximal hierfür benötigten Öffnungshub, der im wesentlichen dem Hub entspricht, der für das Einfahren des Entnahmemittels 13 und die Entnahme des Spritzteils 11 gemäß Fig. 5a nötig ist. In Fig. 5d ist das Spritzteil 11 nach oben aus der Spritzgießform entnommen, und der Führungsblock 14 befindet sich beinahe in seiner anderen Endstellung, in der sich dann eine Lage des Entnahmemittels 13 wie in Fig. 4 oben gestrichelt dargestellt ergibt.

Zur Ablage des Spritzteils 11 wird die Antriebseinheit wieder in gegenläufiger Richtung bewegt, wobei an dem Führungsblock 14 die Entnahmeeinrichtung 10 angeordnet ist, an deren Ende das Entnahmemittel 13 um eine rechtwinklig zur Schließachse s-s angeordnete Achse A schwenkbar gelagert ist. Die dadurch gegebenen Möglichkeiten verdeutlicht Fig. 4.

## Patentansprüche

1. Spritzgießmaschine zur Verarbeitung plastifizierbarer Massen mit
- einer Formschließeinheit (F), in der eine Spritzgießform (M) aufnehmbar ist, wobei die Spritzgießform durch einen Schließmechanismus (S) der Formschließeinheit (F) im Formspannraum (R) in Richtung einer Schließachse (s-s) zu schließen und zu öffnen ist,
- einer Entnahmeeinrichtung (10) zur Entnahme von beim Spritzgiessen entstandenen Teilen (11) aus der geöffneten Spritzgießform (M),
- einem Kulissenelement (28) mit einer Kulissenführung (15),
- einer Antriebseinheit (12) zur Bewegung der Entnahmeeinrichtung (10), entlang der Kulissenführung (15),
- einem in der Kulissenführung (15) geführten Führungselement, das bei Betätigung der Antriebseinheit (12) ein mit ihm verbundenes Entnahmemittel (13) infolge der Bewegung der Entnahmeeinrichtung (10) im wesentlichen quer zur Schließachse (s-s) in die Spritzgießform (M) ein- und ausführt,
**dadurch gekennzeichnet, daß** die Antriebseinheit (12) einenends schwenkbar an dem Kulissenelement (28) und anderenends gelenkig an einem als Führungselement ausgebildeten und in der Kulissenführung (15) an wenigstens zwei Punkten geführten Führungsblock (14) für die Entnahmeeinrichtung (10) gelagert ist, daß die Bewegung der Antriebseinheit im wesentlichen parallel zur Schließachse (s-s) erfolgt und daß die Längserstreckung der von der Schließachse (s-s) weggewölbten Kulissenführung (15) ebenfalls parallel zur Schließachse (s-s) ist.

2. Spritzgießmaschine nach Anspruch 1, **dadurch gekennzeichnet, daß** die Kulissenführung in einer Ebene liegt.

3. Spritzgießmaschine nach Anspruch 1, **dadurch gekennzeichnet, daß** die Entnahmeeinrichtung (10) mit ihrer Antriebseinheit (12) im wesentlichen innerhalb einer quer zur Schließachse (s-s) gerichteten Projektion der Spritzgießmaschine angeordnet ist.

4. Spritzgießmaschine nach Anspruch 1, **dadurch gekennzeichnet daß** die Entnahmeeinrichtung (10) mitsamt ihrer Antriebseinheit einschließlich eines zugeordneten Bewegungsraums in einem durch eine übliche Schutzreinrichtung (16) der Formschließeinheit (F) vorgegebenen Raum angeordnet ist.

5. Spritzgießmaschine nach Anspruch 1, **dadurch gekennzeichnet, daß** das Entnahmemittel (13) ein bedarfsweise über gesonderte Antriebsmittel betätigbarer Greifer ist.

6. Spritzgießmaschine nach Anspruch 1, **dadurch gekennzeichnet, daß** die Antriebseinheit (12) auf einem in Richtung der Schließachse (s-s) beweglichen Schlitten (17) angeordnet ist.

7. Spritzgießmaschine nach Anspruch 1, **dadurch gekennzeichnet, daß** der Führungsblock (14) die Entnahmeeinrichtung (10) trägt, an deren Ende das Entnahmemittel (13) um eine rechtwinklig zur Schließachse (s-s) angeordnete Achse (A) schwenkbar gelagert ist.

8. Spritzgießmaschine nach Anspruch 1, **dadurch gekennzeichnet, daß** die Antriebseinheit auf wenigstens einem Trägerbalken (19) bewegbar ist, der sich über die Längserstreckung der Formschließeinheit (F) hinaus erstreckt.

9. Spritzgießmaschine nach Anspruch 7, **dadurch gekennzeichnet, daß** vorzugsweise zwei Trägerbalken (19) über je zwei Stützbalken (20, 21) über der Formschließeinheit (F) abgestützt sind, wobei ein hinterer Stützbalken (21) im Bereich eines Abstützelements (22) für den Schließmechanismus (S) angeordnet ist, und ein vorderer Stützbalken (20) hinter dem beweglichen Formträger (23) in seiner hintersten Stellung angeordnet ist.

## Claims

1. An injection moulding machine for processing plastifiable masses comprising
- a mould closing unit (F), in which an injection mould (M) is receivable, wherein the mould can be closed and opened via a closing mechanism (S) of the mould closing unit (F) in the mould clamping chamber (R) in the direction of a closing axis (s-s),
- an extractor device (10) for removing injection mouldings (11) produced during injection from the opened injection mould (M).
- a cam element (28) comprising a cam guide (15),
- a drive unit (12) for movement of the extractor device (10) along the cam guide (15),
- a guiding element guided in the cam guide (15), which, when the drive unit (12) is actuated, introduces and withdraws an extraction means (13) linked therewith as a result of the movement of the extractor device (10) essentially transversely of the closing axis (s-s) into and out of the injection mould (M).
**characterized in that** the drive unit (12) is pivotally mounted at one end at the cam element (28) and at the other end in articulated manner at a guiding block (14) for the extractor device (10) constructed as a guiding element guided in the cam guide (15) at least at two points, **in that** the movement of the drive unit essentially is effected parallel to the closing axis (s-s) and **in that** the longitudinal extent of the cam guide (15) curved away from the closing axis (s-s) is also parallel to the closing axis (s-s).

2. An injection moulding machine according to claim 1, **characterized in that** the cam guide lies in a plane.

3. An injection moulding machine according to claim1, **characterized in that** the extractor device (10) with its drive unit (12) is essentially arranged within a projection of the injection moulding machine directed transversely of the closing axis (s-s).

4. An injection moulding machine according to claim 1, **characterized in that** the extractor device (10) together with its drive unit including an associated space for movement is arranged in a space predetermined by a conventional protection unit (16) of the mould closing unit (F).

5. An injection moulding machine according to claim 1, **characterized in that** the extraction means (13) is a gripper which is actuable by means of separate drive means if necessary.

6. An injection moulding machine according to claim 1, **characterized in that** the drive unit (12) is arranged on a carriage (17) movable in the direction of the closing axis (s-s).

7. An injection moulding machine according to claim 1, **characterized in that** the guiding block (14) carries the extractor device (10), at the end of which the extraction means (13) is pivotally mounted around an axis (A) arranged perpendicular with respect to the closing axis (s-s).

8. An injection moulding machine according to claim 1, **characterised in that** the drive unit is movable on at least one support bar (19), which extends over the longitudinal extent of the mould closing unit (F).

9. An injection moulding machine according to claim 7, **characterized in that** preferably two support bars (19) are each supported by means of two braces (20, 21) over the mould closing unit (F), wherein a rear brace (21) is arranged in the area of a supporting element (22) for the closing mechanism (S) and a front brace (20) is arranged behind the movable mould carrier (23) in its rearmost position.

## Revendications

1. Machine à mouler par injection pour le traitement de matières plastifiables, comportant
- une unité de fermeture de moule (F), dans laquelle peut être reçu un moule à injection (M), le moule à injection pouvant être fermé et ouvert par un mécanisme de fermeture (S) de l'unité de fermeture de moule (F) dans l'espace de serrage du moule (R), en direction d'un axe de fermeture (s - s),
- un dispositif de démoulage (10) pour démouler du moule à injection (M) ouvert des pièces (11) formées lors du moulage par injection,
- un élément de coulisse (28) avec un guide de coulisse (15),
- une unité d'entraînement (12) pour le déplacement du dispositif de démoulage (10), le long du guide de coulisse (15),
- un élément de guidage, guidé dans le guide de coulisse (15), qui introduit et sort dans le/du moule à injection (M), lors de l'actionnement de l'unité d'entraînement (12), un moyen de démoulage (13) avec lequel il est assemblé, par suite du déplacement du dispositif de démoulage (10) de façon essentiellement transversale à l'axe de fermeture (s - s),
**caractérisée en ce que** l'unité d'entraînement (12) est montée sur une extrémité avec une possibilité de pivotement sur l'élément de coulisse (28) et s'articule sur l'autre extrémité sur un bloc de guidage (14) pour le dispositif de démoulage (10), réalisé sous forme d'élément de guidage et guidé en au moins deux points dans le guide de coulisse (15), **en ce que** le déplacement de l'unité d'entraînement est essentiellement parallèle à l'axe de fermeture (s - s), et **en ce que** l'extension longitudinale du guide de coulisse (15), cintré à l'écart de l'axe de fermeture (s - s), est également parallèle à l'axe de fermeture (s - s).

2. Machine à mouler par injection suivant la revendication 1, **caractérisée en ce que** le guide de coulisse se situe dans un plan.

3. Machine à mouler par injection suivant la revendication 1, **caractérisée en ce que** le dispositif de démoulage (10), avec son unité d'entraînement (12), est disposé essentiellement à l'intérieur d'une projection, dirigée transversalement à l'axe de fermeture (s - s), de la machine à mouler par injection.

4. Machine à mouler par injection suivant la revendication 1, **caractérisée en ce que** le dispositif de démoulage (10) avec son unité d'entraînement, y compris un espace de déplacement associé, est disposé dans un espace prédéfini par un dispositif de protection courant (16) de l'unité de fermeture de moule (F).

5. Machine à mouler par injection suivant la revendication 1, **caractérisée en ce que** le moyen de démoulage (13) est une pince, actionnable en cas de besoin par des moyens d'entraînement séparés.

6. Machine à mouler par injection suivant la revendication 1, **caractérisée en ce que** l'unité d'entraînement (12) est disposée sur un chariot (17) mobile en direction de l'axe de fermeture (s - s).

7. Machine à mouler par injection suivant la revendication 1, **caractérisée en ce que** le bloc de guidage (14) supporte le dispositif de démoulage (10), sur l'extrémité duquel est monté le moyen de démoulage (13) avec une possibilité de pivotement autour d'un axe (A) disposé perpendiculairement à l'axe de fermeture (s - s).

8. Machine à mouler par injection suivant la revendication 1, **caractérisée en ce que** l'unité d'entraînement peut se déplacer sur au moins une poutre support (19), qui s'étend par-dessus l'extension longitudinale de l'unité de fermeture de moule (F).

9. Machine à mouler par injection suivant la revendication 7, **caractérisée en ce que** de préférence deux poutres supports (19) s'appuient sur l'unité de fermeture de moule (F) par l'intermédiaire de respectivement deux poutres d'appui (20, 21), une poutre d'appui arrière (21) étant disposée dans la zone d'un élément d'appui (22) pour le mécanisme de fermeture (S), et une poutre d'appui avant (20) étant disposée derrière le porte-moule mobile (23) dans la position la plus arrière de ce dernier.
